# EUROPÄISCHE PATENTSCHRIFT

(11) **EP 3 407 234 B1**
(45) Veröffentlichungstag und Bekanntmachung des Hinweises auf die Patenterteilung: **19.02.2025**
(21) Anmeldenummer: 18173593.7
(22) Anmeldetag: 22.05.2018
(51) Int. Cl.: G06F 21/34, G06F 21/62

(54) **VORRICHTUNG UND VERFAHREN ZUM VERIFIZIEREN EINER IDENTITÄT EINER PERSON**
DEVICE AND METHOD FOR VERIFYING AN IDENTITY OF A PERSON
DISPOSITIF ET PROCÉDÉ DE VÉRIFICATION D'UNE IDENTITÉ D'UNE PERSONNE

(30) Priorität: 24.05.2017 DE 102017111482
(43) Veröffentlichungstag der Anmeldung: 28.11.2018
(73) Patentinhaber: Bundesdruckerei GmbH, 10969 Berlin (DE)
(72) Erfinder: RACH, Andreas, 10119 Berlin (DE); MAGGIONI, Christoph, 10961 Berlin (DE); WOLF, Andreas, 13158 Berlin (DE)
(74) Vertreter: Patentship Patentanwaltsgesellschaft mbH

(56) Entgegenhaltungen:
- WO-A2-2016/120826
- JP-A- 2003 109 053
- US-A1- 2010 034 376
- US-A1- 2011 057 027
- US-A1- 2011 078 779
- US-A1- 2018 041 345

## Beschreibung

Die vorliegende Erfindung betrifft das Gebiet der Identitätsverifikation.

Die Offenlegungsschrift WO 2016/120826 A2 offenbart ein Kommunikationsverfahren auf dem Gebiet der Kryptowährung.

Die Offenlegungsschrift US 2011/078779 A1 offenbart ein Verfahren zum Zugreifen auf einen Account.

Die Offenlegungsschrift US 2011/057027 A1 offenbart ein Bezahlverfahren.

Die Offenlegungsschrift US 2010/034376 A1 offenbart ein Generieren von Hashwerten basierend auf persönlichen Daten.

Die Offenlegungsschrift JP 2003109053 A offenbart ein Generieren von Hashwerten basierend auf persönlichen Daten.

Zur Durchführung bestimmter Dienstleistungen, insbesondere elektronischer Dienstleistungen im Internet, ist eine vorherige Verifikation einer Identität einer Person erforderlich. Derartige Dienstleistungen umfassen beispielsweise Bankdienstleistungen oder Vermittlungsdienstleistungen für Verträge. Dabei sollen insbesondere Personendaten der Person, wie beispielsweise das Geburtsdatum der Person, verifiziert werden.

Bislang werden derartige Verifikationen durch die Anbieter der Dienstleistungen auf der Basis eines Identifikationsdokumentes, beispielsweise eines Personalausweises, eines Reisepasses oder eines Führerscheines, durchgeführt. Die Prüfung unterschiedlicher Identifikationsdokumente ist typischerweise nicht ohne weiteres möglich. Ferner kann es zu Betrugsfällen durch die Nachahmung oder Verfälschung der Identität oder der Personendaten der Person kommen. Insbesondere können den Anbietern der Dienstleistungen hierdurch finanzielle Schäden entstehen.

Es ist daher eine Aufgabe der vorliegenden Erfindung, ein effizientes Konzept zum Verifizieren einer Identität einer Person zu schaffen.

Diese Aufgabe wird durch die Merkmale der unabhängigen Ansprüche gelöst. Vorteilhafte Weiterbildungsformen sind Gegenstand der abhängigen Patentansprüche, der Beschreibung sowie der Zeichnungen.

Die Erfindung basiert auf der Erkenntnis und schließt diese mit ein, dass die obige Aufgabe durch die Verwendung anonymisierter Hashwerte gelöst werden kann, welche in einem Server vorgespeichert sind, und welche zur Verifikation der Authentizität von Datensätzen verwendet werden können, welche jeweils Personendaten einer echten Person umfassen. Dadurch kann erreicht werden, dass eine einfache Verifikation der Identität einer Person und von deren Personendaten realisiert werden kann.

Das zentrale Speichern der anonymisierten Hashwerte, welche jeweils aus einem Datensatz, insbesondere einem amtlichen oder verifizierten Datensatz, einer echten Person generiert wurden, kann beispielsweise durch einen Server erfolgen, welcher durch einen Verifikationsdienst zur Identitätsverifikation betrieben wird. Dadurch wird ferner gewährleistet, dass lediglich anonymisierte Hashwerte zentral vorgehalten werden und ein Rückschluss auf die jeweiligen Personendaten durch den Server nicht möglich bzw. nicht nachvollziehbar ist. Insbesondere kann auf ein zentrales Vorhalten schutzwürdiger Personendaten von Personen verzichtet werden.

Gemäß einem ersten Aspekt betrifft die Erfindung eine Vorrichtung zum Verifizieren einer Identität einer Person, wobei der Person zumindest ein Personendatum zugeordnet ist. Die Vorrichtung umfasst eine Erfassungseinrichtung, welche ausgebildet ist, das zumindest eine Personendatum der Person zu erfassen, und einen Datensatz zu erzeugen, wobei der Datensatz das zumindest eine Personendatum umfasst. Die Vorrichtung umfasst ferner einen Prozessor, welcher ausgebildet ist, einen Hashwert des Datensatzes unter Verwendung einer Hashfunktion zu bestimmen. Die Vorrichtung umfasst zudem eine Kommunikationsschnittstelle, welche ausgebildet ist, den Hashwert des Datensatzes über ein Kommunikationsnetzwerk an einen Server auszusenden, und einen Verifikationsindikator über das Kommunikationsnetzwerk von dem Server zu empfangen, um die Identität der Person zu verifizieren. Der Verifikationsindikator zeigt an, ob der Hashwert einem vorgespeicherten Hashwert einer Mehrzahl vorgespeicherter Hashwerte in dem Server entspricht. Der Verifikationsindikator zeigt somit eine Authentizität des Datensatzes an.

Falls die Kommunikationsschnittstelle den Verifikationsindikator empfängt, kann die Identität der Person beispielsweise als bestätigt gelten. Falls die Kommunikationsschnittstelle nach Ablauf einer vorbestimmten Zeitdauer keinen Verifikationsindikator empfängt oder falls die Kommunikationsschnittstelle einen Ablehnungsindikator von dem Server über das Kommunikationsnetzwerk empfängt, kann die Identität der Person beispielsweise als nicht bestätigt gelten. Die vorbestimmte Zeitdauer kann beispielsweise 1 Sekunde, 2 Sekunden, 5 Sekunden oder 10 Sekunden betragen.

Gemäß einer Ausführungsform ist die Kommunikationsschnittstelle ausgebildet, den Datensatz nicht über das Kommunikationsnetzwerk an den Server auszusenden. Dadurch wird der Vorteil erreicht, dass der Datensatz mit dem zumindest einen Personendatum lokal bei der Vorrichtung verbleibt. Ferner kann der erzeugte Datensatz unmittelbar nach der Bestimmung des Hashwertes gelöscht werden, um eine Weiterverarbeitung bzw. eine Aussendung des Datensatzes über das Kommunikationsnetzwerk zu vermeiden.

Gemäß einer Ausführungsform umfasst das zumindest eine Personendatum zumindest eines der folgenden Personendaten: einen Vornamen der Person, einen Mittelnamen der Person, einen Nachnamen der Person, eine Anschrift der Person, ein Geburtsdatum der Person, einen Geburtsort der Person, ein Alter der Person. Dadurch wird der Vorteil erreicht, dass verschiedene Personendaten, welche für unterschiedliche Dienstleistungen relevant sein können, durch den Datensatz umfasst sein können. Der Datensatz kann beispielsweise ein Personendatum oder mehrere Personendaten umfassen, welche in beliebiger Kombination aus den vorstehenden Personendaten vorab ausgewählt sein können.

Gemäß einer Ausführungsform ist die Hashfunktion eine MD5-Hashfunktion oder eine SHA-Hashfunktion. Dadurch wird der Vorteil erreicht, dass effiziente Hashfunktionen zur Bestimmung des Hashwertes eingesetzt werden können. Im Allgemeinen können jedoch auch beliebige andere Hashfunktionen - je nach Bedarf - eingesetzt werden. Durch die Verwendung einer Hashfunktion können insbesondere Kollisionen durch gleiche Hashwerte bei unterschiedlichen Datensätzen vermieden werden.

Gemäß einer Ausführungsform umfasst die Erfassungseinrichtung eine Tastatur zum Eingeben des zumindest einen Personendatums. Dadurch wird der Vorteil erreicht, dass das zumindest eine Personendatum besonders einfach erfasst werden kann. Die Tastatur kann lokal bei der Vorrichtung angeordnet sein und beispielsweise durch die Person oder durch einen Mitarbeiter, beispielsweise einen Bankmitarbeiter, zum Eingeben des zumindest einen Personendatums verwendet werden.

Gemäß einer Ausführungsform ist der Person ein Identifikationsdokument zugeordnet, wobei das zumindest eine Personendatum in dem Identifikationsdokument elektronisch gespeichert ist, und wobei die Erfassungseinrichtung ein Lesegerät zum Auslesen des zumindest einen Personendatums aus dem Identifikationsdokument umfasst. Dadurch wird der Vorteil erreicht, dass das zumindest eine Personendatum effizient der Person zugeordnet werden kann. Ferner kann das zumindest eine Personendatum der Person automatisiert erfasst werden, wodurch der Komfort bei der Erfassung des zumindest einen Personendatums gesteigert und potentielle Fehlerfassungen bei manueller Eingabe vermieden werden können.

Gemäß einer Ausführungsform ist der Person ein Identifikationsdokument zugeordnet, wobei das zumindest eine Personendatum auf dem Identifikationsdokument aufgedruckt ist, und wobei die Erfassungseinrichtung eine Bildkamera zum optischen Erfassen des zumindest einen Personendatums auf dem Identifikationsdokument umfasst. Dadurch wird der Vorteil erreicht, dass das zumindest eine Personendatum effizient der Person zugeordnet werden kann. Ferner kann das zumindest eine Personendatum der Person automatisiert erfasst werden, wodurch der Komfort bei der Erfassung des zumindest einen Personendatums gesteigert und potentielle Fehlerfassungen bei manueller Eingabe vermieden werden können.

Gemäß einer Ausführungsform ist die Erfassungseinrichtung ausgebildet, ein Ausstellungsdatum des Identifikationsdokumentes, ein Ablaufdatum des Identifikationsdokumentes oder eine Kennnummer des Identifikationsdokumentes zu erfassen, wobei der Datensatz ferner das Ausstellungsdatum des Identifikationsdokumentes, das Ablaufdatum des Identifikationsdokumentes oder die Kennnummer des Identifikationsdokumentes umfasst. Dadurch wird der Vorteil erreicht, dass der Datensatz ferner dem Identifikationsdokument der Person eindeutig zugeordnet sein kann.

Das Ausstellungdatum, das Ablaufdatum und/oder die Kennnummer können beispielsweise in dem Identifikationsdokument elektronisch gespeichert oder auf dem Identifikationsdokument aufgedruckt sein. Das Ausstellungdatum, das Ablaufdatum und/oder die Kennnummer können folglich durch die Tastatur, das Lesegerät oder die Bildkamera erfasst werden. Die Kennnummer des Identifikationsdokumentes kann beispielsweise eine Seriennummer des Identifikationsdokumentes sein.

Gemäß einer Ausführungsform ist die Kommunikationsschnittstelle ausgebildet, mit dem Server über eine authentifizierte und/oder verschlüsselte Kommunikationsverbindung zu kommunizieren. Dadurch wird der Vorteil erreicht, dass der Hashwert und der Verifikationsindikator über das Kommunikationsnetzwerk gesichert übertragen werden können. Ferner kann eine Authentizität der Vorrichtung und/oder des Servers bei der Kommunikation über das Kommunikationsnetzwerk verifiziert und gewährleistet werden.

Gemäß einem zweiten Aspekt betrifft die Erfindung einen Server zum Verifizieren einer Authentizität eines Datensatzes, wobei der Datensatz zumindest ein Personendatum einer Person umfasst, und wobei dem Datensatz ein Hashwert zugeordnet ist. Der Server umfasst eine Kommunikationsschnittstelle, welche ausgebildet ist, den Hashwert des Datensatzes über ein Kommunikationsnetzwerk von einer Vorrichtung zu empfangen. Der Server umfasst ferner eine Datenbank, in welcher eine Mehrzahl von Hashwerten einer Mehrzahl von Datensätzen gespeichert ist, wobei jedem Hashwert der Mehrzahl von Hashwerten ein Datensatz der Mehrzahl von Datensätzen zugeordnet ist. Der Server umfasst zudem einen Prozessor, welcher ausgebildet ist, den empfangenen Hashwert mit der Mehrzahl von Hashwerten in der Datenbank zu vergleichen, und einen Verifikationsindikator zu erzeugen, falls der empfangene Hashwert einem Hashwert der Mehrzahl von Hashwerten entspricht.

Die Kommunikationsschnittstelle ist ausgebildet, den Verifikationsindikator über das Kommunikationsnetzwerk an die Vorrichtung auszusenden.

Die Authentizität des Datensatzes repräsentiert in diesem Zusammenhang eine Authentizität bzw. Echtheit der Person. Insbesondere repräsentiert die Authentizität des Datensatzes eine Authentizität bzw. Echtheit der durch den Datensatz umfassten Personendaten. Durch den Vergleich des empfangenen Hashwertes mit der Mehrzahl von Hashwerten in der Datenbank wird folglich eine Verifikation der Authentizität des Datensatzes bzw. eine Verifikation der Authentizität der Person erreicht. Somit kann gewährleistet werden, dass die Personendaten des Datensatzes einer echten Person zugeordnet sind. Der empfangene Hashwert entspricht beispielsweise dann einem Hashwert der Mehrzahl von Hashwerten falls der empfangene Hashwert identisch ist mit einem Hashwert der Mehrzahl von Hashwerten.

Gemäß einer Ausführungsform ist der Prozessor ausgebildet, keinen Verifikationsindikator zu erzeugen, falls der empfangene Hashwert keinem Hashwert der Mehrzahl von Hashwerten entspricht. Dadurch wird der Vorteil erreicht, dass an die Vorrichtung kein Verifikationsindikator zur Bestätigung der Identität der Person ausgesendet wird. Folglich kann die Vorrichtung die Identität der Person als nicht bestätigt betrachten.

Gemäß einer Ausführungsform ist der Prozessor ausgebildet, einen Ablehnungsindikator zu erzeugen, falls der empfangene Hashwert keinem Hashwert der Mehrzahl von Hashwerten entspricht, wobei die Kommunikationsschnittstelle ausgebildet ist, den Ablehnungsindikator über das Kommunikationsnetzwerk an die Vorrichtung auszusenden. Dadurch wird der Vorteil erreicht, dass der Vorrichtung signalisiert werden kann, dass der Hashwert des Datensatzes keinem Hashwert der Mehrzahl von Hashwerten in der Datenbank entspricht. Folglich kann die Vorrichtung die Identität der Person als nicht bestätigt betrachten.

Gemäß einer Ausführungsform sind der empfangene Hashwert und die Mehrzahl von Hashwerten in der Datenbank einem vorbestimmten Verifikationsniveau zugeordnet. Dadurch wird der Vorteil erreicht, dass eine Qualität der Verifikation der Identität der Person berücksichtigt werden kann. Das vorbestimmte Verifikationsniveau kann beispielsweise eine Anzahl der Personendaten und/oder Arten der Personendaten anzeigen, welche von dem Datensatz umfasst sind.

Das vorbestimmte Verifikationsniveau kann beispielsweise von der zu erbringenden Dienstleistung abhängig sein. Beispielsweise kann ein erstes vorbestimmtes Verifikationsniveau die Verwendung einer hohen Anzahl von Personendaten in dem Datensatz vorsehen, und kann ein zweites vorbestimmtes Verifikationsniveau die Verwendung einer geringen Anzahl von Personendaten in dem Datensatz vorsehen. Das erste vorbestimmte Verifikationsniveau kann beispielsweise zur umfassenden Verifikation der Identität der Person vorgesehen sein, und das zweite Verifikationsniveau kann beispielsweise zur kursorischen Verifikation der Identität der Person vorgesehen sein.

Gemäß einer Ausführungsform ist die Kommunikationsschnittstelle ausgebildet, mit der Vorrichtung über eine authentifizierte und/oder verschlüsselte Kommunikationsverbindung zu kommunizieren. Dadurch wird der Vorteil erreicht, dass der Hashwert und der Verifikationsindikator über das Kommunikationsnetzwerk gesichert übertragen werden können. Ferner kann eine Authentizität der Vorrichtung und/oder des Servers bei der Kommunikation über das Kommunikationsnetzwerk verifiziert und gewährleistet werden.

Gemäß einem dritten Aspekt betrifft die Erfindung eine Anordnung zum Verifizieren einer Identität einer Person. Die Anordnung umfasst eine Vorrichtung gemäß dem ersten Aspekt der Erfindung, und einen Server gemäß dem zweiten Aspekt der Erfindung.

Die Vorrichtung und der Server können über ein Kommunikationsnetzwerk, beispielsweise das Internet, miteinander kommunizieren.

Gemäß einem vierten Aspekt betrifft die Erfindung ein Verfahren zum Verifizieren einer Identität einer Person unter Verwendung einer Vorrichtung, wobei der Person zumindest ein Personendatum zugeordnet ist, und wobei die Vorrichtung eine Erfassungseinrichtung, einen Prozessor und eine Kommunikationsschnittstelle umfasst. Das Verfahren umfasst ein Erfassen des zumindest einen Personendatums der Person durch die Erfassungseinrichtung, ein Erzeugen eines Datensatzes durch die Erfassungseinrichtung, wobei der Datensatz das zumindest eine Personendatum umfasst, ein Bestimmen eines Hashwertes des Datensatzes unter Verwendung einer Hashfunktion durch den Prozessor, ein Aussenden des Hashwertes des Datensatzes über ein Kommunikationsnetzwerk an einen Server durch die Kommunikationsschnittstelle, und ein Empfangen eines Verifikationsindikators über das Kommunikationsnetzwerk von dem Server durch die Kommunikationsschnittstelle, um die Identität der Person zu verifizieren.

Das Verfahren kann durch die erfindungsgemäße Vorrichtung ausgeführt werden. Weitere Merkmale des Verfahrens resultieren unmittelbar aus den Merkmalen und/oder der Funktionalität der Vorrichtung.

Gemäß einem fünften Aspekt betrifft die Erfindung ein Verfahren zum Verifizieren einer Authentizität eines Datensatzes unter Verwendung eines Servers, wobei der Datensatz zumindest ein Personendatum einer Person umfasst, wobei dem Datensatz ein Hashwert zugeordnet ist, wobei der Server eine Kommunikationsschnittstelle, eine Datenbank und einen Prozessor umfasst, wobei in der Datenbank eine Mehrzahl von Hashwerten einer Mehrzahl von Datensätzen gespeichert ist, und wobei jedem Hashwert der Mehrzahl von Hashwerten ein Datensatz der Mehrzahl von Datensätzen zugeordnet ist. Das Verfahren umfasst ein Empfangen des Hashwertes des Datensatzes über ein Kommunikationsnetzwerk von einer Vorrichtung durch die Kommunikationsschnittstelle, ein Vergleichen des empfangenen Hashwertes mit der Mehrzahl von Hashwerten in der Datenbank durch den Prozessor, ein Erzeugen eines Verifikationsindikators durch den Prozessor, falls der empfangene Hashwert einem Hashwert der Mehrzahl von Hashwerten entspricht, und ein Aussenden des Verifikationsindikators über das Kommunikationsnetzwerk an die Vorrichtung durch die Kommunikationsschnittstelle.

Das Verfahren kann durch den Server ausgeführt werden. Weitere Merkmale des Verfahrens resultieren unmittelbar aus den Merkmalen und/oder der Funktionalität des Servers.

Gemäß einem sechsten Aspekt betrifft die Erfindung ein Computerprogramm mit einem Programmcode zum Ausführen des Verfahrens gemäß dem vierten Aspekt der Erfindung und/oder des Verfahrens gemäß dem fünften Aspekt der Erfindung.

Die Vorrichtung und/oder der Server können programmtechnisch eingerichtet sein, um den Programmcode auszuführen.

Die Erfindung kann in Hardware und/oder Software realisiert werden.

Weitere Ausführungsbeispiele werden Bezug nehmend auf die beiliegenden Zeichnungen näher erläutert. Es zeigen:
- Fig. 1: ein schematisches Diagramm einer Vorrichtung zum Verifizieren einer Identität einer Person;
- Fig. 2: ein schematisches Diagramm eines Servers zum Verifizieren einer Authentizität eines Datensatzes;
- Fig. 3: ein schematisches Diagramm einer Anordnung zum Verifizieren einer Identität einer Person;
- Fig. 4: ein schematisches Diagramm eines Verfahrens zum Verifizieren einer Identität einer Person unter Verwendung einer Vorrichtung;
- Fig. 5: ein schematisches Diagramm eines Verfahrens zum Verifizieren einer Authentizität eines Datensatzes unter Verwendung eines Servers;
- Fig. 6: ein schematisches Diagramm einer Verifikation einer Identität einer Person; und
- Fig. 7: ein schematisches Diagramm einer Verifikation einer Identität einer Person.

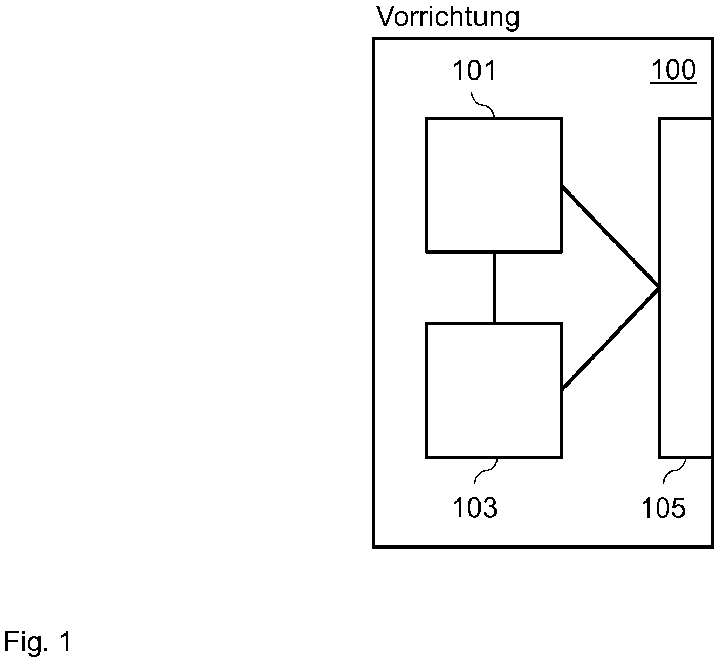

Fig. 1 zeigt ein schematisches Diagramm einer Vorrichtung 100 zum Verifizieren einer Identität einer Person, wobei der Person zumindest ein Personendatum zugeordnet ist. Die Vorrichtung 100 umfasst eine Erfassungseinrichtung 101, welche ausgebildet ist, das zumindest eine Personendatum der Person zu erfassen, und einen Datensatz zu erzeugen, wobei der Datensatz das zumindest eine Personendatum umfasst. Die Vorrichtung 100 umfasst ferner einen Prozessor 103, welcher ausgebildet ist, einen Hashwert des Datensatzes unter Verwendung einer Hashfunktion zu bestimmen. Die Vorrichtung 100 umfasst zudem eine Kommunikationsschnittstelle 105, welche ausgebildet ist, den Hashwert des Datensatzes über ein Kommunikationsnetzwerk an einen Server auszusenden, und einen Verifikationsindikator über das Kommunikationsnetzwerk von dem Server zu empfangen, um die Identität der Person zu verifizieren.

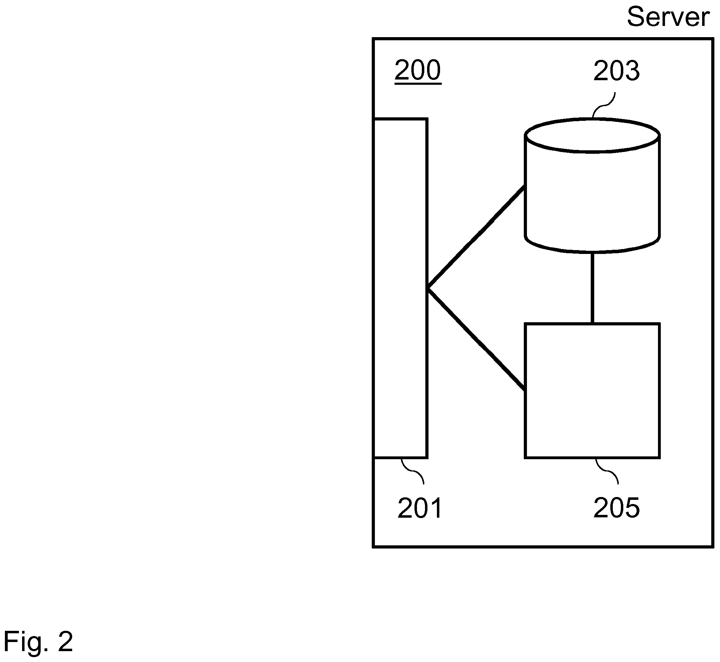

Fig. 2 zeigt ein schematisches Diagramm eines Servers 200 zum Verifizieren einer Authentizität eines Datensatzes, wobei der Datensatz zumindest ein Personendatum einer Person umfasst, und wobei dem Datensatz ein Hashwert zugeordnet ist. Der Server 200 umfasst eine Kommunikationsschnittstelle 201, welche ausgebildet ist, den Hashwert des Datensatzes über ein Kommunikationsnetzwerk von einer Vorrichtung zu empfangen. Der Server 200 umfasst ferner eine Datenbank 203, in welcher eine Mehrzahl von Hashwerten einer Mehrzahl von Datensätzen gespeichert ist, wobei jedem Hashwert der Mehrzahl von Hashwerten ein Datensatz der Mehrzahl von Datensätzen zugeordnet ist. Der Server 200 umfasst zudem einen Prozessor 205, welcher ausgebildet ist, den empfangenen Hashwert mit der Mehrzahl von Hashwerten in der Datenbank zu vergleichen, und einen Verifikationsindikator zu erzeugen, falls der empfangene Hashwert einem Hashwert der Mehrzahl von Hashwerten entspricht. Die Kommunikationsschnittstelle 201 ist ausgebildet, den Verifikationsindikator über das Kommunikationsnetzwerk an die Vorrichtung auszusenden.

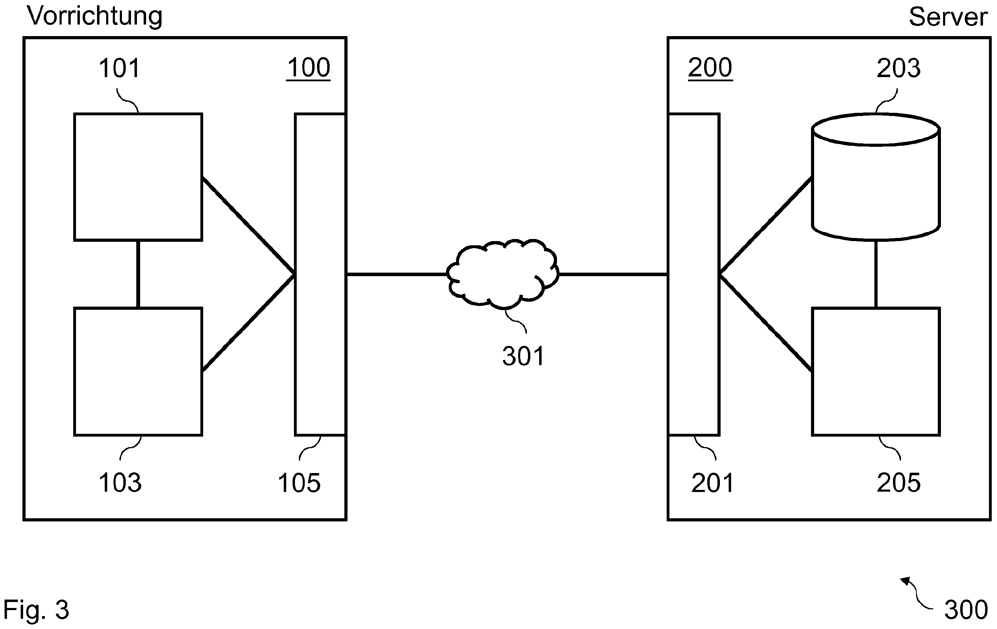

Fig. 3 zeigt ein schematisches Diagramm einer Anordnung 300 zum Verifizieren einer Identität einer Person, wobei der Person zumindest ein Personendatum zugeordnet ist. Die Anordnung 300 umfasst eine Vorrichtung 100 und einen Server 200, wobei die Vorrichtung 100 und der Server 200 über ein Kommunikationsnetzwerk 301, beispielsweise das Internet, miteinander kommunizieren.

Die Vorrichtung 100 umfasst eine Erfassungseinrichtung 101, welche ausgebildet ist, das zumindest eine Personendatum der Person zu erfassen, und einen Datensatz zu erzeugen, wobei der Datensatz das zumindest eine Personendatum umfasst. Die Vorrichtung 100 umfasst ferner einen Prozessor 103, welcher ausgebildet ist, einen Hashwert des Datensatzes unter Verwendung einer Hashfunktion zu bestimmen. Die Vorrichtung 100 umfasst zudem eine Kommunikationsschnittstelle 105, welche ausgebildet ist, den Hashwert des Datensatzes über das Kommunikationsnetzwerk 301 an den Server 200 auszusenden, und einen Verifikationsindikator über das Kommunikationsnetzwerk 301 von dem Server 200 zu empfangen, um die Identität der Person zu verifizieren.

Der Server 200 umfasst eine Kommunikationsschnittstelle 201, welche ausgebildet ist, den Hashwert des Datensatzes über das Kommunikationsnetzwerk 301 von der Vorrichtung 100 zu empfangen. Der Server 200 umfasst ferner eine Datenbank 203, in welcher eine Mehrzahl von Hashwerten einer Mehrzahl von Datensätzen gespeichert ist, wobei jedem Hashwert der Mehrzahl von Hashwerten ein Datensatz der Mehrzahl von Datensätzen zugeordnet ist. Der Server 200 umfasst zudem einen Prozessor 205, welcher ausgebildet ist, den empfangenen Hashwert mit der Mehrzahl von Hashwerten in der Datenbank zu vergleichen, und den Verifikationsindikator zu erzeugen, falls der empfangene Hashwert einem Hashwert der Mehrzahl von Hashwerten entspricht. Die Kommunikationsschnittstelle 201 ist ausgebildet, den Verifikationsindikator über das Kommunikationsnetzwerk 301 an die Vorrichtung 100 auszusenden.

Zur Verifikation der Identität der Person wird folglich, anstatt des Datensatzes mit dem zumindest einen Personendatum, der Hashwert als digitaler Fingerabdruck verwendet. In der Datenbank 203 des Servers 200 ist daher eine Mehrzahl von Hashwerten gespeichert. Eine Anfrage zur Verifikation der Identität der Person, insbesondere zur Bestätigung der Identität der Person, umfasst folglich nicht den Datensatz der zu identifizierenden Person, sondern lediglich den Hashwert des Datensatzes. Die Bestimmung des Hashwertes erfolgt durch den Prozessor 103 beispielsweise mittels einer Hashfunktion nach etablierten technischen Standards, wie beispielsweise MD5 oder SHA, insbesondere SHA-512. Im Allgemeinen können auch andere Hashfunktionen eingesetzt werden, beispielsweise eine SHA-1024 oder eine SHA-2048 Hashfunktion oder eine SHA-3 Hashfunktion. Geeignete Hashfunktionen werden beispielsweise vom NIST (USA) oder dem BSI (DE) standardisiert.

Die verwendeten technischen Standards für die Hashfunktion können jeweils mit entsprechendem zeitlichen Vorlauf von einem Dienstanbieter veröffentlicht und entsprechend der jeweils aktuellen Sicherheitsanforderungen an kryptographische Verfahren ausgewählt werden. Der Dienstanbieter kann beispielsweise auch selbst eine Software-Anwendung zur Verfügung stellen, mit welcher aus einem Datensatz eine Anfrage mit einem Hashwert generieren werden kann und/oder eine Abfrage durchgeführt werden kann.

Ein Datensatz kann beispielsweise einen Vor- und Nachnamen, ein Geburtsdatum und/oder einen Geburtsort umfassen. Mittels der beispielhaften Hashfunktion SHA-512 kann ein anonymisierter Hashwert des Datensatzes als digitaler Fingerabdruck bestimmt bzw. berechnet werden. Dieser Hashwert kann vorab zentral in der Datenbank 203 hinterlegt werden. Insbesondere bei einem festen Ablaufdatum eines Identifikationsdokumentes, welches eine Gültigkeit des Identifikationsdokumentes repräsentieren kann, kann ferner eine Kennnummer des Identifikationsdokumentes verwendet werden, wodurch die Sicherheit des Prozesses weiter erhöht werden kann. Bei Ablauf der Gültigkeit des Identifikationsdokumentes kann der Datensatz mittels eines neuen Identifikationsdokumentes, beispielsweise eines neuen Reisepasses, aktualisiert werden. Der Dienstanbieter kann eine eigene Signatur verwenden, anhand derer die Authentizität der Dienstleistung geprüft werden kann.

Die Mehrzahl von Hashwerten kann manipulationssicher und zentral in der Datenbank 203 des Servers 200 gespeichert sein, wobei der Server 200 von einem Verifikationsdienst betrieben werden kann, beispielsweise in Form eines akkreditierten Trustcenters. Die Mehrzahl von Hashwerten in der Datenbank 203 kann bei Bedarf technisch überholt werden, beispielsweise können längere kryptographische Schlüssel in Verbindung mit neuen Hashfunktionen verwendet werden.

Die Kommunikation zwischen der Vorrichtung 100 bzw. der anfragenden Stelle und dem Server 200 bzw. dem Dienstanbieter kann kryptographisch abgesichert sein, um die Authentizität des Verifikationsindikators zur Bestätigung der Identität sicherzustellen. Die jeweilige Anfrage und die jeweilige Antwort können beispielsweise digital signiert sein.

Ferner kann der Server 200 vor unbefugten Anfragen geschützt werden, wobei verschiedene Standardverfahren genutzt werden können.

Das zumindest eine Personendatum der Person kann zunächst sicher verifiziert werden, beispielsweise durch persönliches Erscheinen mit einem Identifikationsdokument bei einem geschulten Fachmann und eine Überprüfung durch den geschulten Fachmann. Ferner kann bei dem Identifikationsprozess zur einmaligen Aufnahme der Person in die Datenbank 203 ein Identitätsnachweis mittels eines elektronischen Ausweises der Person mit entsprechender Funktionalität erfolgen. Die verwendeten Identifikationsprozesse könnten auch unterschiedlich sein, beispielsweise je nach Datensatz und Personendaten, die aufgenommen werden sollen, oder je nach Dienstleistungsnutzer und seinen Anforderungen. Anschließend kann ein Datensatz mit einem Hashwert erzeugt werden, wobei der Hashwert in der Datenbank 203 abgelegt wird. Die Identitäten von echten Personen können folglich vor der Aufnahme in den Verifikationsdienst vorab sicher verifiziert werden. Beispielsweise kann die Aufnahme der Person in den Verifikationsdienst bereits bei der Beantragung eines Identifikationsdokumentes im Rahmen des Dokumentenproduktionsprozesses erfolgen. Abhängig von gesetzlichen Vorschriften eines Landes kann die Listung von Personen in der Datenbank 203 beispielsweise vorgeschrieben sein oder freiwillig erfolgen. Die einmalige Aufnahme der Person in die Datenbank 203 dient als Grundlage für die Echtheit der im Identifikationsdienst hinterlegten Identitäten. Eine Finanzierung des Verifikationsdienstes kann beispielsweise durch die Dienstanbieter als Nutzer des Verifikationsdienstes, beispielsweise Banken bei einer Kontoeröffnung, erfolgen.

In der Datenbank 203 kann ferner eine Mehrzahl von Hashwerten gespeichert sein, welche bekannten Falschidentitäten zugeordnet sind. In diesem Fall kann eine Rückmeldung an die Vorrichtung 100 als anfragende Stelle dahingehend erfolgen, dass die zu verifizierende Identität eine Falschidentität ist.

Der Ansatz ermöglicht folglich eine technisch effiziente Verifikation einer Vielzahl verschiedener Identität von verschiedenen Personen mittels einfacher Anfragen, ohne dabei Personendaten zentral zu speichern oder vorzuhalten. Die Verifikation der Identität der Person, insbesondere die Bestätigung der Identität der Person, kann ferner schnell, kostengünstig und gesichert für privatgeschäftliche und behördliche Anwendungen erfolgen.

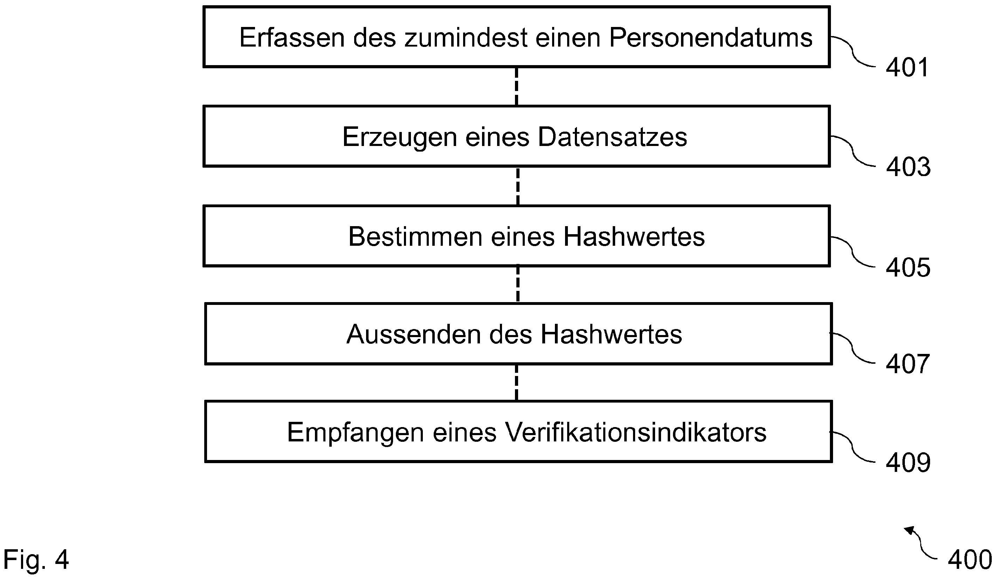

Fig. 4 zeigt ein schematisches Diagramm eines Verfahrens 400 zum Verifizieren einer Identität einer Person unter Verwendung einer Vorrichtung, wobei der Person zumindest ein Personendatum zugeordnet ist, und wobei die Vorrichtung eine Erfassungseinrichtung, einen Prozessor und eine Kommunikationsschnittstelle umfasst. Das Verfahren 400 umfasst ein Erfassen 401 des zumindest einen Personendatums der Person durch die Erfassungseinrichtung, ein Erzeugen 403 eines Datensatzes durch die Erfassungseinrichtung, wobei der Datensatz das zumindest eine Personendatum umfasst, ein Bestimmen 405 eines Hashwertes des Datensatzes unter Verwendung einer Hashfunktion durch den Prozessor, ein Aussenden 407 des Hashwertes des Datensatzes über ein Kommunikationsnetzwerk an einen Server durch die Kommunikationsschnittstelle, und ein Empfangen 409 eines Verifikationsindikators über das Kommunikationsnetzwerk von dem Server durch die Kommunikationsschnittstelle, um die Identität der Person zu verifizieren.

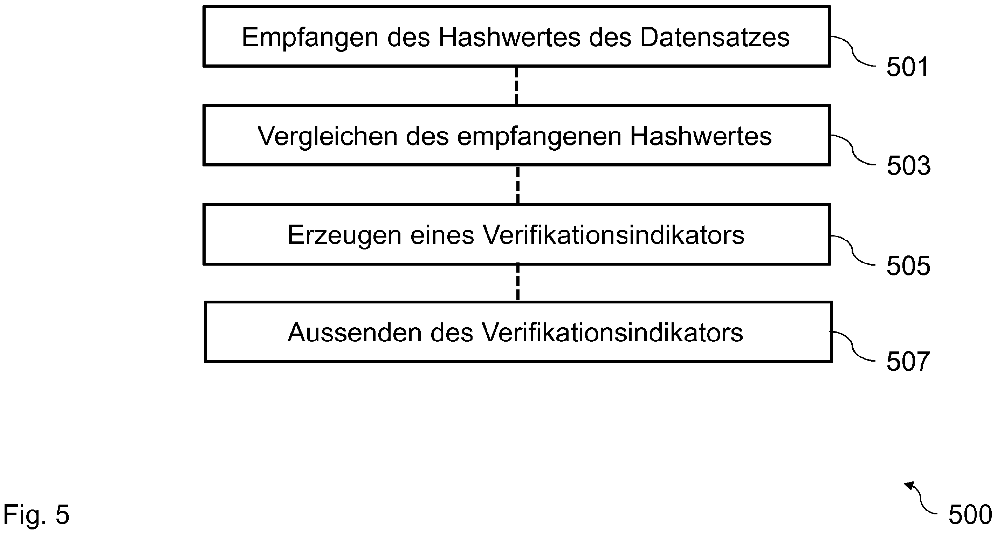

Fig. 5 zeigt ein schematisches Diagramm eines Verfahrens 500 zum Verifizieren einer Authentizität eines Datensatzes unter Verwendung eines Servers, wobei der Datensatz zumindest ein Personendatum einer Person umfasst, wobei dem Datensatz ein Hashwert zugeordnet ist, wobei der Server eine Kommunikationsschnittstelle, eine Datenbank und einen Prozessor umfasst, wobei in der Datenbank eine Mehrzahl von Hashwerten einer Mehrzahl von Datensätzen gespeichert ist, und wobei jedem Hashwert der Mehrzahl von Hashwerten ein Datensatz der Mehrzahl von Datensätzen zugeordnet ist. Das Verfahren 500 umfasst ein Empfangen 501 des Hashwertes des Datensatzes über ein Kommunikationsnetzwerk von einer Vorrichtung durch die Kommunikationsschnittstelle, ein Vergleichen 503 des empfangenen Hashwertes mit der Mehrzahl von Hashwerten in der Datenbank durch den Prozessor, ein Erzeugen 505 eines Verifikationsindikators durch den Prozessor, falls der empfangene Hashwert einem Hashwert der Mehrzahl von Hashwerten entspricht, und ein Aussenden 507 des Verifikationsindikators über das Kommunikationsnetzwerk an die Vorrichtung durch die Kommunikationsschnittstelle.

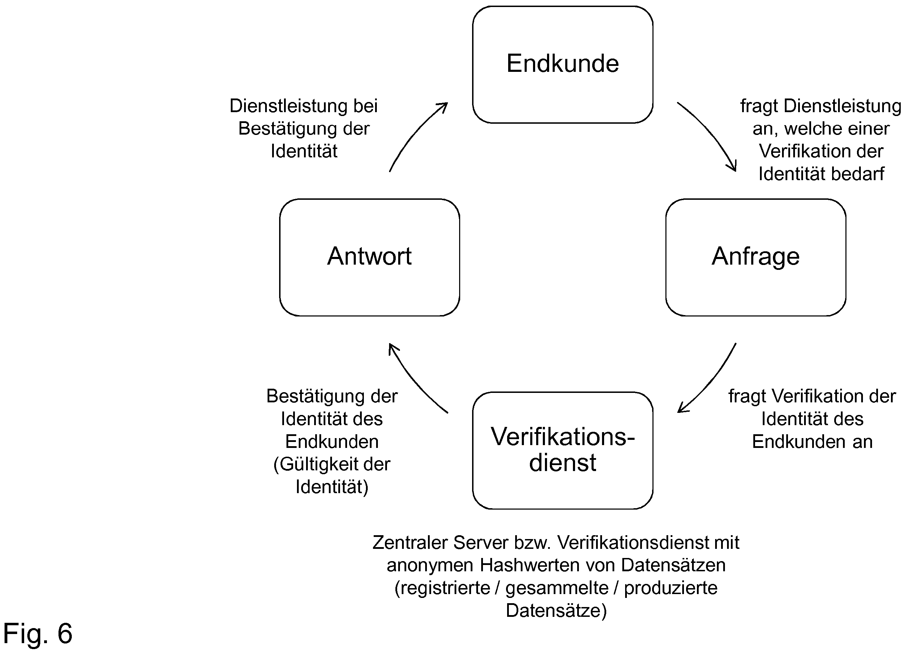

Fig. 6 zeigt ein schematisches Diagramm einer Verifikation einer Identität einer Person. Die Person ist hierbei ein Endkunde, welcher eine Dienstleistung anfragt, welche einer Verifikation der Identität des Endkunden bedarf.

Die Verifikation der Identität des Endkunden wird bei einem Verifikationsdienst angefragt, welcher beispielsweise einen zentralen Server 200 (nicht dargestellt) betreiben kann. Der zentrale Server bzw. der Verifikationsdienst verwalten hierbei eine Mehrzahl anonymer Hashwerte einer Mehrzahl von Datensätzen, welche vorab registriert, gesammelt, oder produziert sein können. Der zentrale Server bzw. der Verifikationsdienst bestätigt die Identität des Endkunden bzw. die Gültigkeit der Identität des Endkunden mittels eines Verifikationsindikators als Antwort. Anschließend kann die angefragte Dienstleistung bei einer Bestätigung der Identität an den Endkunden erbracht werden.

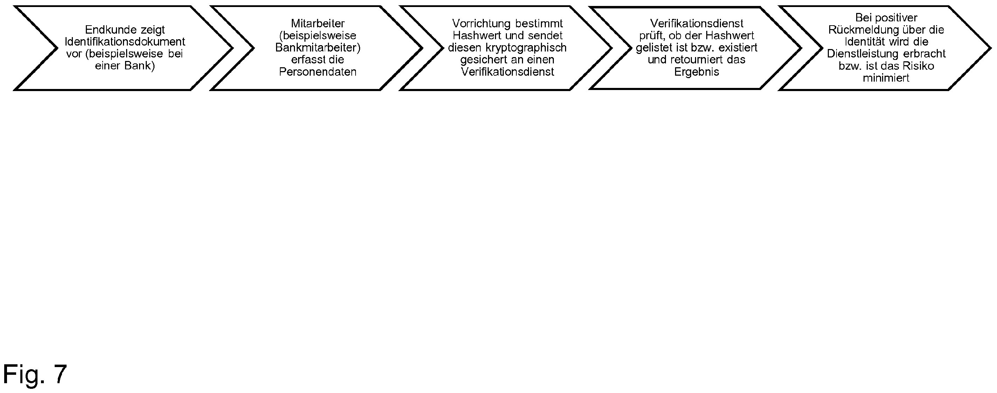

Fig. 7 zeigt ein schematisches Diagramm einer Verifikation einer Identität einer Person. Die Person ist hierbei ein Endkunde, welcher eine Dienstleistung anfragt, welche einer Verifikation der Identität des Endkunden bedarf. Die Dienstleistung kann beispielsweise eine Bankdienstleistung sein, welche durch eine Bank erbracht werden soll.

In einem ersten Schritt zeigt der Endkunde ein Identifikationsdokument, beispielsweise bei einer Bank, vor. Zumindest ein Personendatum des Endkunden ist hierbei elektronisch in dem Identifikationsdokument gespeichert oder auf das Identifikationsdokument aufgedruckt.

In einem nächsten Schritt erfasst ein Mitarbeiter, beispielsweise ein Bankmitarbeiter, das zumindest eine Personendatum des Endkunden. Dies kann beispielsweise manuell mittels einer Tastatur, automatisch mittels eines Lesegerätes oder automatisch mittels einer Bildkamera erfolgen. Ferner kann ein berührungsempfindlicher Bildschirm zum Erfassen des zumindest einen Personendatums eingesetzt werden. Gemäß einer Ausführungsform erfolgt die Erfassung des zumindest einen Personendatums mittels einer Spracheingabe der Person und einer Spracherkennung. Die Erfassung des zumindest einen Personendatums kann ferner an einem Selbstbedienungskiosk erfolgen. Die Vorrichtung erzeugt aus dem zumindest einen Personendatum einen Datensatz und bestimmt einen Hashwert des Datensatzes als digitalen Fingerabdruck. Die Vorrichtung sendet den Hashwert anschließend kryptographisch gesichert an einen Verifikationsdienst aus, welcher beispielsweise einen zentralen Server 200 (nicht dargestellt) betreiben kann.

In einem nächsten Schritt prüft der Verifikationsdienst bzw. der zentrale Server, ob der Hashwert in einer Datenbank gelistet ist bzw. existiert, und erzeugt einen Verifikationsindikator, durch welchen das entsprechende Ergebnis an die Vorrichtung retourniert wird.

Anschließend wird bei einer positiven Rückmeldung über die Identität des Endkunden die angefragte Dienstleistung erbracht, wodurch beispielsweise ein Risiko für die Bank minimiert werden kann.

Alle in Verbindung mit einzelnen Ausführungsformen der Erfindung gezeigten oder beschriebenen Merkmale können in beliebiger Kombination in dem erfindungsgemäßen Gegenstand vorgesehen sein, um gleichzeitig deren vorteilhafte Wirkungen zu realisieren.

### BEZUGSZEICHENLISTE

- 100: Vorrichtung
- 101: Erfassungseinrichtung
- 103: Prozessor
- 105: Kommunikationsschnittstelle

- 200: Server
- 201: Kommunikationsschnittstelle
- 203: Datenbank
- 205: Prozessor

- 300: Anordnung
- 301: Kommunikationsnetzwerk

- 400: Verfahren zum Verifizieren einer Identität einer Person
- 401: Erfassen des zumindest einen Personendatums
- 403: Erzeugen eines Datensatzes
- 405: Bestimmen eines Hashwertes des Datensatzes
- 407: Aussenden des Hashwertes des Datensatzes
- 409: Empfangen eines Verifikationsindikators

- 500: Verfahren zum Verifizieren einer Authentizität eines Datensatzes
- 501: Empfangen des Hashwertes des Datensatzes
- 503: Vergleichen des empfangenen Hashwertes
- 505: Erzeugen eines Verifikationsindikators
- 507: Aussenden des Verifikationsindikators

## Patentansprüche

1. Vorrichtung (100) zum Verifizieren einer Identität einer Person, wobei der Person zumindest Personendaten zugeordnet sind, mit:
einer Erfassungseinrichtung (101), welche ausgebildet ist, verschiedene Personendaten der Person, welche für unterschiedliche Dienstleistungen relevant sind, zu erfassen, und einen Datensatz zu erzeugen, wobei der Datensatz eine ausgewählte Kombination der verschiedenen Personendaten für eine zu erbringende Dienstleistung umfasst;
einem Prozessor (103), welcher ausgebildet ist, einen Hashwert des Datensatzes unter Verwendung einer Hashfunktion zu bestimmen; und
einer Kommunikationsschnittstelle (105), welche ausgebildet ist, den Hashwert des Datensatzes über ein Kommunikationsnetzwerk (301) an einen Server (200) auszusenden, und einen Verifikationsindikator über das Kommunikationsnetzwerk (301) von dem Server (200) zu empfangen, um die Identität der Person zu verifizieren und die Dienstleistung zu erbringen,
wobei der Person ein Identifikationsdokument zugeordnet ist,
wobei die verschiedenen Personendaten in dem Identifikationsdokument elektronisch gespeichert sind, und wobei
die Erfassungseinrichtung (101) ein Lesegerät zum Auslesen der verschiedenen Personendaten aus dem Identifikationsdokument umfasst, oder wobei der Person ein Identifikationsdokument zugeordnet ist, wobei die verschiedenen Personendaten auf dem Identifikationsdokument aufgedruckt sind, und wobei die Erfassungseinrichtung (101) eine Bildkamera zum optischen Erfassen der verschiedenen Personendaten auf dem Identifikationsdokument umfasst.

2. Vorrichtung (100) nach Anspruch 1, wobei die verschiedenen Personendaten zumindest eines der folgenden Personendaten umfasst: einen Vornamen der Person, einen Mittelnamen der Person, einen Nachnamen der Person, eine Anschrift der Person, ein Geburtsdatum der Person, einen Geburtsort der Person, ein Alter der Person.

3. Vorrichtung (100) nach Anspruch 1 oder 2, wobei die Erfassungseinrichtung (101) ausgebildet ist, ein Ausstellungsdatum des Identifikationsdokumentes, ein Ablaufdatum des Identifikationsdokumentes oder eine Kennnummer des Identifikationsdokumentes zu erfassen, wobei der Datensatz ferner das Ausstellungsdatum des Identifikationsdokumentes, das Ablaufdatum des Identifikationsdokumentes oder die Kennnummer des Identifikationsdokumentes umfasst.

4. Vorrichtung (100) nach einem der vorstehenden Ansprüche, wobei die Kommunikationsschnittstelle (105) ausgebildet ist, mit dem Server (200) über eine authentifizierte und/oder verschlüsselte Kommunikationsverbindung zu kommunizieren.

5. Server (200) zum Verifizieren einer Authentizität eines Datensatzes, wobei der Datensatz eine Kombination verschiedener Personendaten einer Person für eine zu erbringende Dienstleistung umfasst, wobei dem Datensatz ein Hashwert zugeordnet ist, mit:
einer Kommunikationsschnittstelle (201), welche ausgebildet ist, den Hashwert des Datensatzes über ein Kommunikationsnetzwerk (301) von einer Vorrichtung (100) zu empfangen;
einer Datenbank (203), in welcher eine Mehrzahl von Hashwerten einer Mehrzahl von Datensätzen gespeichert ist, wobei jeder gespeicherte Datensatz eine Anzahl von verschiedenen Personendaten der Person, welche für unterschiedliche zu erbringenden Dienstleistungen relevant sind, umfasst, wobei jedem Hashwert der Mehrzahl von Hashwerten ein Datensatz der Mehrzahl von Datensätzen zugeordnet ist; und einem Prozessor (205), welcher ausgebildet ist, den empfangenen Hashwert mit der Mehrzahl von Hashwerten in der Datenbank (203) zu vergleichen, und einen Verifikationsindikator für die zu erbringende Dienstleistung zu erzeugen, falls der empfangene Hashwert einem Hashwert der Mehrzahl von Hashwerten entspricht;
wobei die Kommunikationsschnittstelle (201) ausgebildet ist, den Verifikationsindikator über das Kommunikationsnetzwerk (301) an die Vorrichtung (100) auszusenden.

6. Server (200) nach Anspruch 5, wobei der Prozessor (205) ausgebildet ist, keinen Verifikationsindikator zu erzeugen, falls der empfangene Hashwert keinem Hashwert der Mehrzahl von Hashwerten entspricht.

7. Server (200) nach einem der Ansprüche 5 oder 6, wobei der empfangene Hashwert und die Mehrzahl von Hashwerten in der Datenbank (203) einem vorbestimmten Verifikationsniveau zugeordnet sind.

8. Server (200) nach einem der Ansprüche 5 bis 7, wobei die Kommunikationsschnittstelle (201) ausgebildet ist, mit der Vorrichtung (100) über eine authentifizierte und/oder verschlüsselte Kommunikationsverbindung zu kommunizieren.

9. Anordnung (300) zum Verifizieren einer Identität einer Person, mit:
einer Vorrichtung (100) nach einem der Ansprüche 1 bis 4; und
einen Server (200) nach einem der Ansprüche 5 bis 8.

10. Verfahren (400) zum Verifizieren einer Identität einer Person unter Verwendung einer Vorrichtung (100), wobei der Person Personendaten zugeordnet sind, wobei der Person ein Identifikationsdokument zugeordnet ist,
wobei die Vorrichtung (100) eine Erfassungseinrichtung (101), einen Prozessor (103) und eine Kommunikationsschnittstelle (105) umfasst, mit:
Erfassen (401) verschiedener Personendaten der Person, welche für unterschiedliche Dienstleistungen relevant sind, durch die Erfassungseinrichtung (101);
Erzeugen (403) eines Datensatzes durch die Erfassungseinrichtung (101), wobei der Datensatz eine ausgewählte Kombination der verschiedenen Personendaten für eine zu erbringende Dienstleistung umfasst;
Bestimmen (405) eines Hashwertes des Datensatzes unter Verwendung einer Hashfunktion durch den Prozessor (103);
Aussenden (407) des Hashwertes des Datensatzes über ein Kommunikationsnetzwerk (301) an einen Server (200) durch die Kommunikationsschnittstelle (105); und
Empfangen (409) eines Verifikationsindikators über das Kommunikationsnetzwerk (301) von dem Server (200) durch die Kommunikationsschnittstelle (105), um die Identität der Person zu verifizieren und die Dienstleistung zu erbringen,
wobei die verschiedenen Personendaten in dem Identifikationsdokument elektronisch gespeichert sind, und wobei
die Erfassungseinrichtung (101) ein Lesegerät umfasst, wobei die verschiedenen Personendaten aus dem Identifikationsdokument mittels des Lesegeräts ausgelesen werden,
oder wobei die verschiedenen Personendaten auf dem Identifikationsdokument aufgedruckt sind, und wobei die Erfassungseinrichtung (101) eine Bildkamera umfasst, wobei die verschiedenen Personendaten auf dem Identifikationsdokument mittels der Bildkamera optisch erfasst werden.

11. Verfahren (500) zum Verifizieren einer Authentizität eines Datensatzes unter
Verwendung eines Servers (200), wobei der Datensatz eine Kombination verschiedener Personendaten einer Person für eine zu erbringende Dienstleistung umfasst, wobei dem Datensatz ein Hashwert zugeordnet ist, wobei der Server (200) eine Kommunikationsschnittstelle (201), eine Datenbank (203) und einen Prozessor (205) umfasst, wobei in der Datenbank (203) eine Mehrzahl von Hashwerten einer Mehrzahl von Datensätzen gespeichert ist, wobei jeder gespeicherter Datensatz eine Anzahl von verschiedenen Personendaten der Person, welche für unterschiedliche zu erbringenden Dienstleistungen relevant sind, umfasst, wobei jedem Hashwert der Mehrzahl von Hashwerten ein Datensatz der Mehrzahl von Datensätzen zugeordnet ist, mit: Empfangen (501) des Hashwertes des Datensatzes über ein Kommunikationsnetzwerk (301) von einer Vorrichtung (100) durch die Kommunikationsschnittstelle (201); Vergleichen (503) des empfangenen Hashwertes mit der Mehrzahl von Hashwerten in der Datenbank (203) durch den Prozessor (205);
Erzeugen (505) eines Verifikationsindikators für die zu erbringende Dienstleistung durch den Prozessor (205), falls der empfangene Hashwert einem Hashwert der Mehrzahl von Hashwerten entspricht; und Aussenden (507) des Verifikationsindikators über das Kommunikationsnetzwerk (301) an die Vorrichtung (100) durch die Kommunikationsschnittstelle (201).

12. Computerprogramm mit einem Programmcode zum Ausführen des Verfahrens (400) nach Anspruch 10 oder des Verfahrens (500) nach Anspruch 11.

## Claims

1. Device (100) for verifying an identity of a person, wherein at least personal data is assigned to the person, the device (100) comprising:
a detection device (101), which is configured to detect various personal data of the person, which are relevant for different services, and to generate a data set, wherein the data set comprises a selected combination of the various personal data for a service to be provided;
a processor (103), which is configured to determine a hash value of the data set using a hash function; and
a communication interface (105), which is configured to send the hash value of the data set to a server (200) via a communication network (301), and to receive a verification indicator from the server (200) via the communication network (301) in order to verify the identity of the person and to provide the service,
where an identification document is assigned to the person,
wherein the various personal data are stored electronically in the identification document, and wherein the detection device (101) comprises a reading device for reading the various personal data from the identification document, or wherein an identification document is assigned to the person, wherein the various personal data are printed on the identification document, and wherein the detection device (101) comprises an image camera for optically detecting the various personal data on the identification document.

2. Device (100) according to claim 1, wherein the various personal data comprises at least one of the following personal data: a first name of the person, a middle name of the person, a last name of the person, an address of the person, a date of birth of the person, a place of birth of the person, an age of the person.

3. Device (100) according to claim 1 or 2, wherein the detection device (101) is configured to detect an issue date of the identification document, an expiration date of the identification document or an identification number of the identification document, wherein the data set further comprises the issue date of the identification document, the expiration date of the identification document or the identification number of the identification document.

4. Device (100) according to one of the preceding claims, wherein the communication interface (105) is configured to communicate with the server (200) via an authenticated and/or encrypted communication connection.

5. Server (200) for verifying an authenticity of a data set, wherein the data set comprises a combination of various personal data of a person for a service to be provided, wherein a hash value is assigned to the data set, the server (200) comprising:
a communication interface (201), which is configured to receive the hash value of the data set from a device (100) via a communication network (301);
a database (203), in which a plurality of hash values of a plurality of data sets are stored, wherein each stored data set comprises a number of various personal data of the person, which are relevant for different services to be provided, wherein each hash value of the plurality of hash values is assigned a data set of the plurality of data sets; and
a processor (205), configured to compare the received hash value with the plurality of hash values in the database (203), and to generate a verification indicator for the service to be provided, if the received hash value corresponds to a hash value of the plurality of hash values;
wherein the communication interface (201) is configured to send the verification indicator to the device (100) via the communication network (301).

6. Server (200) according to claim 5, wherein the processor (205) is configured to generate no verification indicator, if the received hash value does not correspond to a hash value of the plurality of hash values.

7. Server (200) according to one of claims 5 or 6, wherein the received hash value and the plurality of hash values in the database (203) are associated with a predetermined verification level.

8. Server (200) according to one of claims 5 to 7, wherein the communication interface (201) is configured to communicate with the device (100) via an authenticated and/or encrypted communication connection.

9. Arrangement (300) for verifying an identity of a person, comprising:
a device (100) according to one of claims 1 to 4; and
a server (200) according to one of claims 5 to 8.

10. Method (400) for verifying an identity of a person using a device (100), wherein personal data is associated with the person, wherein an identification document is associated with the person,
wherein the device (100) comprises a detection device (101), a processor (103) and a communication interface (105), the method (400) comprising:
detecting (401) various personal data of the person, which are relevant for different services, by the detection device (101);
generating (403) a data set by the detection device (101), wherein the data set comprises a selected combination of the various personal data for a service to be provided;
determining (405) a hash value of the data set using a hash function by the processor (103);
sending (407) the hash value of the data set via a communication network (301) to a server (200) by the communication interface (105); and
receiving (409) a verification indicator via the communication network (301) from the server (200) by the communication interface (105) in order to verify the identity of the person and provide the service,
wherein the various personal data are stored electronically in the identification document, and wherein the detection device (101) comprises a reading device, wherein the various personal data are read from the identification document by means of the reading device, or wherein the various personal data are printed on the identification document, and wherein the detection device (101) comprises an image camera, wherein the various personal data on the identification document are optically detected by means of the image camera.

11. Method (500) for verifying an authenticity of a data set using a server (200), wherein the data set comprises a combination of various personal data of a person for a service to be provided, wherein a hash value is assigned to the data set, wherein the server (200) comprises a communication interface (201), a database (203) and a processor (205), wherein a plurality of hash values of a plurality of data sets are stored in the database (203), wherein each stored data set comprises a number of various personal data of the person, which are relevant for different services to be provided, wherein each hash value of the plurality of hash values is assigned a data set of the plurality of data sets, the method (500) comprising:
receiving (501) the hash value of the data set via a communication network (301) from a device (100) by the communication interface (201);
comparing (503) the received hash value with the plurality of hash values in the database (203) by the processor (205);
generating (505) a verification indicator for the service to be provided by the processor (205), if the received hash value corresponds to a hash value of the plurality of hash values; and
sending (507) the verification indicator via the communication network (301) to the device (100) by the communication interface (201).

12. Computer program comprising a program code for executing the method (400) according to claim 10 or the method (500) according to claim 11.

## Revendications

1. Dispositif (100) de vérification d'une identité d'une personne, dans lequel au moins des données personnelles sont attribuées à la personne, le dispositif (100) comprenant :
un dispositif de détection (101), qui est configuré pour détecter diverses données personnelles de la personne, qui sont pertinentes pour différents services, et pour générer un ensemble de données, l'ensemble de données comprenant une combinaison sélectionnée des diverses données personnelles pour un service à fournir ;
un processeur (103), qui est configuré pour déterminer une valeur de hachage de l'ensemble de données à l'aide d'une fonction de hachage ; et
une interface de communication (105), qui est configurée pour envoyer la valeur de hachage de l'ensemble de données à un serveur (200) via un réseau de communication (301), et pour recevoir un indicateur de vérification du serveur (200) via le réseau de communication (301) afin de vérifier l'identité de la personne et de fournir le service,
lorsqu'un document d'identification est attribué à la personne,
dans lequel les différentes données personnelles sont stockées électroniquement dans le document d'identification, et dans lequel le dispositif de détection (101) comprend un dispositif de lecture pour lire les différentes données personnelles à partir du document d'identification, ou dans lequel un document d'identification est attribué à la personne, dans lequel les différentes données personnelles sont imprimées sur le document d'identification, et dans lequel le dispositif de détection (101) comprend une caméra d'image pour détecter optiquement les différentes données personnelles sur le document d'identification.

2. Dispositif (100) selon la revendication 1, dans lequel les différentes données personnelles comprennent au moins une des données personnelles suivantes : un prénom de la personne, un deuxième prénom de la personne, un nom de famille de la personne, une adresse de la personne, une date de naissance de la personne, un lieu de naissance de la personne, un âge de la personne.

3. Dispositif (100) selon la revendication 1 ou 2, dans lequel le dispositif de détection (101) est configuré pour détecter une date d'émission du document d'identification, une date d'expiration du document d'identification ou un numéro d'identification du document d'identification, l'ensemble de données comprenant en outre la date d'émission du document d'identification, la date d'expiration du document d'identification ou le numéro d'identification du document d'identification.

4. Dispositif (100) selon l'une des revendications précédentes, dans lequel l'interface de communication (105) est configurée pour communiquer avec le serveur (200) via une connexion de communication authentifiée et/ou cryptée.

5. Serveur (200) pour vérifier l'authenticité d'un ensemble de données, l'ensemble de données comprenant une combinaison de diverses données personnelles d'une personne pour un service à fournir, une valeur de hachage étant attribuée à l'ensemble de données, le serveur (200) comprenant :
une interface de communication (201), qui est configurée pour recevoir la valeur de hachage de l'ensemble de données à partir d'un dispositif (100) via un réseau de communication (301)
une base de données (203), dans laquelle une pluralité de valeurs de hachage d'une pluralité d'ensembles de données sont stockées, chaque ensemble de données stocké comprenant un certain nombre de données personnelles diverses de la personne, qui sont pertinentes pour différents services à fournir, chaque valeur de hachage de la pluralité de valeurs de hachage étant attribuée à un ensemble de données de la pluralité d'ensembles de données ; et
un processeur (205), configuré pour comparer la valeur de hachage reçue avec la pluralité de valeurs de hachage dans la base de données (203), et pour générer un indicateur de vérification pour le service à fournir, si la valeur de hachage reçue correspond à une valeur de hachage de la pluralité de valeurs de hachage ;
dans lequel l'interface de communication (201) est configurée pour envoyer l'indicateur de vérification au dispositif (100) via le réseau de communication (301).

6. Serveur (200) selon la revendication 5, dans lequel le processeur (205) est configuré pour ne générer aucun indicateur de vérification, si la valeur de hachage reçue ne correspond pas à une valeur de hachage de la pluralité de valeurs de hachage.

7. Serveur (200) selon l'une des revendications 5 ou 6, dans lequel la valeur de hachage reçue et la pluralité de valeurs de hachage dans la base de données (203) sont associées à un niveau de vérification prédéterminé.

8. Serveur (200) selon l'une des revendications 5 à 7, dans lequel l'interface de communication (201) est configurée pour communiquer avec le dispositif (100) via une connexion de communication authentifiée et/ou cryptée.

9. Dispositif (300) de vérification de l'identité d'une personne, comprenant :
un dispositif (100) selon l'une des revendications 1 à 4 ; et
un serveur (200) selon l'une des revendications 5 à 8.

10. Procédé (400) de vérification d'une identité d'une personne à l'aide d'un dispositif (100), dans lequel des données personnelles sont associées à la personne, dans lequel un document d'identification est associé à la personne,
dans lequel le dispositif (100) comprend un dispositif de détection (101), un processeur (103) et une interface de communication (105), le procédé (400) comprenant :
détecter (401) diverses données personnelles de la personne, qui sont pertinentes pour différents services, par le dispositif de détection (101) ;
générer (403) un ensemble de données par le dispositif de détection (101), l'ensemble de données comprenant une combinaison sélectionnée des diverses données personnelles pour un service à fournir ;
déterminer (405) une valeur de hachage de l'ensemble de données à l'aide d'une fonction de hachage par le processeur (103) ;
envoyer (407) la valeur de hachage de l'ensemble de données via un réseau de communication (301) à un serveur (200) par l'interface de communication (105) ; et
recevoir (409) un indicateur de vérification via le réseau de communication (301) en provenance du serveur (200) par l'interface de communication (105) afin de vérifier l'identité de la personne et de fournir le service,
dans lequel les différentes données personnelles sont stockées électroniquement dans le document d'identification, et dans lequel le dispositif de détection (101) comprend un dispositif de lecture, dans lequel les différentes données personnelles sont lues à partir du document d'identification au moyen du dispositif de lecture, ou dans lequel les différentes données personnelles sont imprimées sur le document d'identification, et dans lequel le dispositif de détection (101) comprend une caméra d'image, dans lequel les différentes données personnelles sur le document d'identification sont détectées optiquement au moyen de la caméra d'image.

11. Procédé (500) de vérification d'une authenticité d'un ensemble de données à l'aide d'un serveur (200), l'ensemble de données comprenant une combinaison de diverses données personnelles d'une personne pour un service à fournir, une valeur de hachage étant attribuée à l'ensemble de données, le serveur (200) comprenant une interface de communication (201), une base de données (203) et un processeur (205), une pluralité de valeurs de hachage d'une pluralité d'ensembles de données étant stockées dans la base de données (203), chaque ensemble de données stocké comprenant un certain nombre de diverses données personnelles de la personne, qui sont pertinentes pour différents services à fournir, chaque valeur de hachage de la pluralité de valeurs de hachage étant attribuée à un ensemble de données de la pluralité d'ensembles de données, le procédé (500) comprenant:
recevoir (501) la valeur de hachage de l'ensemble de données via un réseau de communication (301) à partir d'un dispositif (100) par l'interface de communication (201) ;
comparer (503) la valeur de hachage reçue avec la pluralité de valeurs de hachage dans la base de données (203) par le processeur (205) ;
générer (505) un indicateur de vérification pour le service à fournir par le processeur (205), si la valeur de hachage reçue correspond à une valeur de hachage de la pluralité de valeurs de hachage ; et
envoi (507) de l'indicateur de vérification via le réseau de communication (301) au dispositif (100) par l'interface de communication (201).

12. Programme informatique comprenant un code de programme pour exécuter le procédé (400) selon la revendication 10 ou le procédé (500) selon la revendication 11.
